# EUROPÄISCHE PATENTSCHRIFT

(11) **EP 2 730 062 B1**
(45) Veröffentlichungstag und Bekanntmachung des Hinweises auf die Patenterteilung: **08.04.2015**
(21) Anmeldenummer: 12735784.6
(22) Anmeldetag: 05.07.2012
(51) Int. Cl.: H04L 12/40, H04L 12/24, H04L 29/08, H04L 12/28

(54) **SYSTEM UND VERFAHREN ZUR PARAMETRIERUNG VON FELDGERÄTEN EINES AUTOMATISIERUNGS- ODER STEUERUNGSSYSTEMS**
SYSTEM AND METHOD FOR PARAMETERIZING FIELD DEVICES OF AN AUTOMATION OR CONTROL SYSTEM
SYSTÈME ET PROCÉDÉ DE PARAMÉTRAGE D'APPAREILS DE TERRAIN D'UN SYSTÈME D'AUTOMATISATION OU DE COMMANDE

(30) Priorität: 06.07.2011 DE 102011107321
(43) Veröffentlichungstag der Anmeldung: 14.05.2014
(73) Patentinhaber: ABB AG, 68309 Mannheim (DE)
(72) Erfinder: ISMAIL, Muhamad-Ikhwan, 91056 Erlangen (DE); GUTERMUTH, Stefan, 64653 Lorsch (DE)
(86) Internationale Anmeldenummer: PCT/EP2012/002824
(87) Internationale Veröffentlichungsnummer: WO 2013/004384

(56) Entgegenhaltungen:
- US-A1- 2003 135 596
- US-A1- 2004 117 465
- US-A1- 2006 280 127

## Beschreibung

Die Erfindung betrifft ein System und Verfahren zur Parametrierung von Feldgeräten eines Automatisierungs- oder Steuerungssystems.

Automatisierungssysteme zur Steuerung eines technischen Prozesses oder einer technischen Anlage umfassen üblicherweise eine zentrale Steuereinheit. Die zentrale Steuereinheit kommuniziert über ein Kommunikationsschnittstellenmodul auch Gateway-Gerät genannt, mit den Ein-/ Ausgabeeinheiten und/oder Feldgeräten des Automatisierungssystems. Das Gateway- Gerät stellt dabei die Kommunikationsfähigkeit zwischen Feldbussen verschiedener Protokolle bereit.

Die US 2006/0280127 A1 zeigt ein Verfahren zur Parametrierung von Endgeräten im häuslichen Netzwerk, wobei initiiert durch eine Anfrage-Meldung das Gateway Einstellungsinformationen aus einer eigenen Datenbank oder von einem externen Service-Provider beziehungsweise von einem externen Hersteller-Server an das Endgerät übermittelt.

Die US 2003/135596 A1 zeigt ein Adaptermodul in einem Konfigurationsmanager, welches herstellerneutrale Gerätekonfigurationseinstellungen von einem Konfigurationskonfigurator in herstellerspezifische Gerätekonfigurationseinstellungen überführt, und diese konvertierten Einstellungen an das zu konfigurierende Gerät übermittelt.

Bei den in der Prozessautomatisierung auf der Leitsystemebene eingesetzten High Speed Ethernet-Bussen arbeitet das Gateway- Gerät Vermittlungsglied zwischen der Leitsystemebene, in der die Daten mit Übertragungsraten von 10 MBit/s übertragen werden, und der Feldebene, in der sich die Kommunikation beispielsweise für Feldbusprotokolle mit einer Übertragungsrate von 1.2 KBit/s erfolgt. Während auf der Leitsystemebene der Gateway die Funktion eines Slaves hat, hat es auf der Feldebene die Funktion eines Masters.

Üblicherweise sind die in Automatisierungs- oder Steuerungssystemen eingesetzten Gateway- Geräte mit der übergeordneten Steuereinheit über einen ersten Bus verbunden und kommunizieren mit den Feldgeräten über einen zweiten Bus. Zur Kommunikation von verschiedene Protokolle verarbeitenden Feldbussystemen kommuniziert das Gateway- Gerät beispielsweise über ein Ethernet- basiertes oder PROFINET- Protokoll mit der zentralen Steuereinheit und über ein Feldbusprotokoll, wie beispielsweise CAN oder CANopen mit daran angeschlossenen Ein-/ Ausgabegeräten und/oder Feldgeräten.

Damit die Ein- und Ausgänge der Hardware des Systems ansprechbar sind, müssen die im System eingesetzten Geräte entsprechend den jeweiligen kundenspezifischen Anforderungen konfiguriert und parametriert werden. Das Verfahren zur Parametrierung und Konfigurierung ist beispielsweise in der IEC 61131-3 beschrieben.

Zur Konfigurierung und Parametrierung eines Feldgerätes ist eine Gerätebeschreibungsdatei vorgesehen, welche in das Feldgerät übertragen wird. Die Gerätebeschreibungsdatei umfasst beispielsweise gerätespezifische Informationen für Antriebe, Instrumentierungen für Positionierzustände, Druck-, Temperatur- und/oder Durchflussmengenmessungen und Niederspannungsschaltgeräte sowie auch Funktionalitäten der Feldgeräte, die sich auf den gesamten Lebenszyklus der Geräte beziehen.

Die Parametrierung der an das Gateway- Gerät angeschlossenen Geräten erfolgt üblicherweise über im Gateway- Gerät integrierte zusätzliche Schnittstellen, welche beispielsweise mittels eines Anwenderprogramms konfiguriert und parametriert werden.

Dazu sind im Gateway- Gerät, vorzugsweise als RS232, /RS422 und/oder RS485-Schnittstelle ausgeführte seriellen Schnittstellen vorgesehen, über die die Gerätebeschreibungsdateien mit den entsprechenden Parametern, beispielsweise in den Flash Speicher des Gateways, geladen werden. Auch kann das Gateway- Gerät über eine USB- Schnittstelle mit einem PC verbunden sein, über den die Parametrierung der Feldgeräte ausführbar ist.

Eine vollständige Parametrierung der an das Gateway- Gerät angeschlossenen Feldgeräte über den ersten hochleistungsfähigen Ethernet- oder PROFIBUS ist dabei nicht vorgesehen.

Der Erfindung liegt demgemäß die Aufgabe zugrunde, ein neuartiges System und Verfahren zur Parametrierung von Feldgeräten eines Automatisierungs- oder Steuerungssystems anzugeben, wodurch die Parametrierung der Geräte des Steuerungsoder Automatisierungssystems vereinfacht wird und insbesondere eine vollständige Parametrierung von an ein Gateway- Gerät angeschlossenen Feldgeräten über einen hochleistungsfähigen Ethernet- oder PROFIBUS ausführbar ist.

Diese Aufgabe wird erfindungsgemäß gelöst durch ein System zur Parametrierung und/oder Konfigurierung von Feldgeräten eines Automatisierungs- oder Steuerungssystems über ein Kommunikationsschnittstellenmodul, auch als Gateway-Gerät bezeichnet, welches zum Anschluss von Feldgeräten über ein Bussystem an eine übergeordnete Steuereinheit und zur Kopplung von wenigstens zwei Feldbussystemen vorgesehen ist mit den im Anspruch 1 angegebenen Merkmalen. Ein Verfahren zur Ausführung der Erfindung sowie vorteilhafte Ausgestaltungen und Verbesserungen des erfindungsgemäßen Systems und Verfahrens sind in weiteren Ansprüchen und in der Beschreibung angegeben.

Das erfindungsgemäße System und Verfahren ist zur Verwendung in Automatisierungsoder Steuerungssystemen der Prozessautomation oder Maschinensteuerung vorgesehen.

Das erfindungsgemäße System zur Parametrierung und Konfigurierung von Feldgeräten eines Automatisierungs- oder Steuerungssystems umfasst eine als Master arbeitende übergeordnete Einheit, beispielsweise eine Steuereinheit (SPS) oder ein Leitsystem, die über eine erste Kommunikationsverbindung basierend auf einem ersten Feldbusprotokoll mit einem Kommunikationsschnittstellenmodul verbunden ist. Der Master steuert dass daran angeschlossene Slave- Gerät zur Datenübertragung, welches Zugriff auf das Netzwerk des Automatisierungs- oder Steuerungssystems hat.

Das Kommunikationsschnittstellenmodul ist über eine zweite Kommunikationsverbindung basierend auf einem zweiten Feldbusprotokoll mit wenigstens einem als Slave arbeitenden Feldgerät verbunden.

Die Datenstruktur zur Parametrierung des Feldgerätes ist in einer Gerätebeschreibungsdatei abgelegt.

Nach einer Erzeugung von vorzugsweise drei, primären Unterblöcken aus der Gerätebeschreibungsdatei des Feldgerätes, ist die nunmehr aus den Unterblöcken bestehende Gerätebeschreibungsdatei in der übergeordneten Einheit abgelegt. Es können jedoch auch mehr als drei primäre Unterblöcke erzeugt werden. Dies ist beispielsweise dann hilfsreich, wenn der sekundäre Feldbus dies benötigt, beispielsweise für Sonderkonfigurationen.

Eine Zerlegung der Gerätebeschreibungsdatei in Unterblöcke bzw. Teilkonfigurationen ist auch deshalb vorteilhaft, da es möglicht ist, dass ein Unterblock/Teilkonfiguration zu groß ist, oder dass eine andere Teilkonfigurationen nicht mehr in dem gleichen Block (z.B. wegen Einschränkung in primären Bus bzgl. Maximaler Blockgröße) passen.

Durch die Zerlegung der Gerätebeschreibungsdatei in die Unterblöcke werden in vorteilhafter Weise Konfigurationsfehler durch eine bessere Analysemöglichkeit schneller aufdeckbar.

Der erste Block umfasst Informationen zur die Netzwerkkonfiguration/ Übertragungstechnik des Slave-Gerätes für das zweite Feldbusprotokoll, wie beispielsweise Informationen zu Netzwerkadressen und Übertragungsgeschwindigkeit. Der zweite Block umfasst Informationen über die interne Gerätekonfiguration des Slave-Gerätes, wie beispielsweise die Konfiguration der zyklischen Echtzeitdaten, die Konfiguration der analogen Kanäle, das Verhalten der sicherheitsgerichteten Ein-/ Ausgänge. Der dritte Block umfasst die Konfiguration des Prozessabbildes, wie beispielsweise das Abbild und die Anzahl der Ein-/ Ausgänge.

Ein erster Netzwerkdienst überträgt die in den drei Unterblöcken abgelegten Parameter des Feldgerätes von der übergeordneten Einheit über die erste Kommunikationsverbindung in eine als Slave- Funktion arbeitende erste Funktionalität des Kommunikationsschnittstellenmoduls.

Eine im Kommunikationsschnittstellenmodul integrierte weitere Funktionalität wertet die in den abgelegten Parameter des Feldgerätes aus und fasst/konvertiert die drei Unterblöcken zu einem einzigen Konfigurationsblock zusammen. Dies wird in der Gateway- Funktionseinheit ausgeführt, welche die für die Übersetzung von Daten/Konfiguration/Dienste zwischen primären und sekundären Bussen zuständig ist.

Nach einem Laden des zusammengefassten Konfigurationsblock in einen Feldbusmaster-Stack des Kommunikationsschnittstellenmoduls führt eine als Master- Funktion arbeitende zweite Funktionalität des Kommunikationsschnittstellenmoduls mittels eines zweiten Netzwerkdienstes eine Übertragung des zuvor erzeugten Konfigurationsblocks, auch als Standardkonfiguration des Feldgerätes bezeichenbar, über die zweite Kommunikationsverbindung den in das Feldgerät aus. Ein Stack bezieht sich auf ein Kommunikationssoftwarepaket, das die ISO/OSI-Schichten gemäß IEC 61131-3 implementiert, die in einem Gerät verwendet werden. Also der sekundäre Bus (Master Funktion) ist als alleinstehende SW Module realisiert, die als Stack bezeichnet werden.

Das Kommunikationsschnittstellenmodul hat auf der übergeordneten Ebene zur übergeordneten Einheit die Funktion eines Slaves und auf der Feldebene zu den Feldgeräten die Funktion eines Masters. Das Kommunikationsschnittstellenmodul übernimmt dabei die Kommunikation der daran angeschlossenen Feldgeräte mit dem übergeordneten Steuersystem mittels der als Master-Anschaltung ausgeführten ersten Hochleistungs- Kommunikationsverbindung, als auch die Kommunikation der an den zweiten Bus angeschlossenen Feldgeräte über die im Kommunikationsschnittstellenmodul integrierte als Slave- Anschaltung ausgeführte zweite Kommunikationsverbindung, wobei die Master- und Slave- Anschaltungen für den Datenaustausch der Feldgeräte über das Bussystem mittels vorab genannter spezieller Software- und/oder Hardwaremodule verwirklicht sind.

In einer bevorzugten Ausgestaltung des erfindungsgemäßen Systems kommuniziert das Kommunikationsschnittstellenmodul mit der übergeordneten Einheit über ein hochleistungsfähige (hochgeschwindigkeits-) Ethernet-, PROFINET oder PROFIBUS Protokoll und mit den Feldgeräten (30) über das Feldbusprotokoll CAN oder CANOPEN.

Dabei umfasst ein Unterblock die Gerätenetzwerkkonfiguration mit der CANopen- Knotenkennung (CANopen node ID) des an CANopen angeschlossenen Gerätes, mit der Synchronisiernachricht (SYNC) und die Nodeguarding- Funktion und der Überwachungsfunktionseinstellung (Heartbeat settings) für das als Slave arbeitende Gerät und wird beispielsweise mit einem PROFINET azyklischem Dienst unter Index 1 gesendet. Mit der Synchronisiernachricht SYNC ist ein CANopen Frame bezeichnet, der den Buszyklus bestimmt und die Slaves synchronisiert. Die Nodeguarding/Heartbeat settings betreffen die Konfiguration für die Busüberwachung im CANopen.

Ist die Option Nodeguarding aktiviert, so wird eine Nachricht an das Gerät verschickt. Meldet sich das Gerät daraufhin nicht mit der angegebenen Guard COB-ID (Communication Object Identifier), so erhält es einen Status Timeout. Ist die Anzahl der Versuche (Life Time Factor) erreicht, so gilt das Modul als nicht OK. Der Status des Moduls wird bei einer Diagnoseadresse hinterlegt. Ist keine Guard Time und kein Life Time Factor angegeben, erfolgt keine Überwachung des Moduls.

Ist die Option "Heartbeat Erzeugung" aktiviert, sendet das Gerät in den bei Heartbeat Producer Time angegebenen ms-Abständen sogenannte Hearbeats aus. Ist die Option "Heartbeat Verbrauch aktivieren" aktiviert, hört das Modul auf Heartbeats, die vom Master gesendet werden. Sobald solche nicht mehr empfangen werden, schaltet das Gerät die Ein-/ Ausgänge ab.

Ein weiterer Unterblock umfasst die geräteinterne Konfiguration mit den Servicedatenobjekten SDO (Service Data Object) zur Parametrisierung von Objektverzeichniseinträgen für das CANopen Slave- Gerät und wird mit einem PROFINET azyklischem Dienst unter Index 2 gesendet.

Ein dritter Unterblock umfasst die Konfiguration des Prozessabbildes mit den Prozessdatenobjekten PDO (Process Data Object) zum Transport von Echtzeitdaten für das CANopen Slave- Gerät und wird mit einem PROFINET azyklischem Dienst unter Index 3 gesendet.

Das Kommunikationsschnittstellenmodul liest und erfasst alle drei Unterblöcke, wertet die Unterblöcke aus und konvertiert sie in einen Kompleten Parameterblock für den internen CANopen Master, so dass der CANopen Slave ohne zusätzliche Kopplung über einen dritten Bus konfiguriert werden muss.

Mit dem erfindungsgemäßen Modul werden somit die Gerätekosten des Automatisierungs- oder Steuerungssystem erheblich reduziert, da die üblicherweise als separate Geräte ausgeführten Eingabeeinheiten, Ausgabeeinheiten oder auch Ein- und Ausgabeeinheiten durch eine Verwirklichung ihrer Funktionen im erfindungsgemäßen Kommunikationsschnittstellenmodul eingespart werden und somit die Feldgeräte direkt ohne einen zusätzlichen Bus an das Gateway- Gerät anschließbar sind.

Die Erfindung ermöglicht in vorteilhafter Weise eine Parametrierung, beispielsweise der Anzahl der Ein- und/oder Ausgänge, die Nutzung als digitale oder analoge Ein- und/oder Ausgänge bzw. die Festlegung ihrer Einstellbereiche über die vorhandenen Kommunikationsverbindungen ohne einen zusätzlichen Anschluss der Feldgeräte an ein Bediengerät, beispielsweise über eine als RS232, /RS422 und/oder RS485-Schnittstelle ausgeführte seriellen Schnittstelle.

Ein Verfahren zur Parametrierung von Feldgeräte des Automatisierungs- oder Steuerungssystems ist dem Anspruch 9 zu entnehmen. Das erfindungsgemäße Verfahren geht davon aus, dass eine übergeordnete Einheit über eine erste Kommunikationsverbindung basierend auf einem ersten Feldbusprotokoll mit einem Kommunikationsschnittstellenmodul verbunden wird und das Kommunikationsschnittstellenmodul über eine zweite Kommunikationsverbindung basierend auf einem zweiten Feldbusprotokoll mit wenigstens einem Feldgerät verbunden wird.

Aus der in einer Gerätebeschreibungsdatei für das Feldgerät abgelegten Datenstruktur zur Parametrierung des Feldgerätes werden Unterblöcke erzeugt. Die erzeugten Unterblöcke werden mittels eines ersten Netzwerkdienstes von der übergeordneten Einheit über die erste Kommunikationsverbindung in eine als Slave- Funktion arbeitende erste Funktionalität des Kommunikationsschnittstellenmoduls übertragen und mittels einer weiteren Funktionalität auswertet und zu einem einzigen Konfigurationsblock zusammenfasst.

Der zusammengefasste Konfigurationsblock wird dann in einen Feldbusmaster- Stack des Kommunikationsschnittstellenmoduls geladen und mittels eines zweiten Netzwerkdienstes wird der Konfigurationsblock über eine als Master- Funktion arbeitende zweite Funktionalität des Kommunikationsschnittstellenmoduls über die zweite Kommunikationsverbindung der Konfigurationsblock in das Feldgerät übertragen.

Anhand von den in der folgenden Figuren dargestellten Ausführungsbeispielen sollen die Erfindung sowie vorteilhafte Ausgestaltungen, Verbesserungen und weitere Vorteile der Erfindung näher erläutert und beschrieben werden.

Es zeigen:
- **Fig. 1**: einen Ausschnitt aus einem Steuerungssystem mit dem erfindungsgemäßen System zur Parametrierung einer Vielzahl von Feldgeräten über eine übergeordnete Steuereinheit, und
- **Fig. 2**: einen beispielhaften Verfahrensablauf zur Parametrierung von Feldgeräten des Automatisierungs- oder Steuerungssystems.

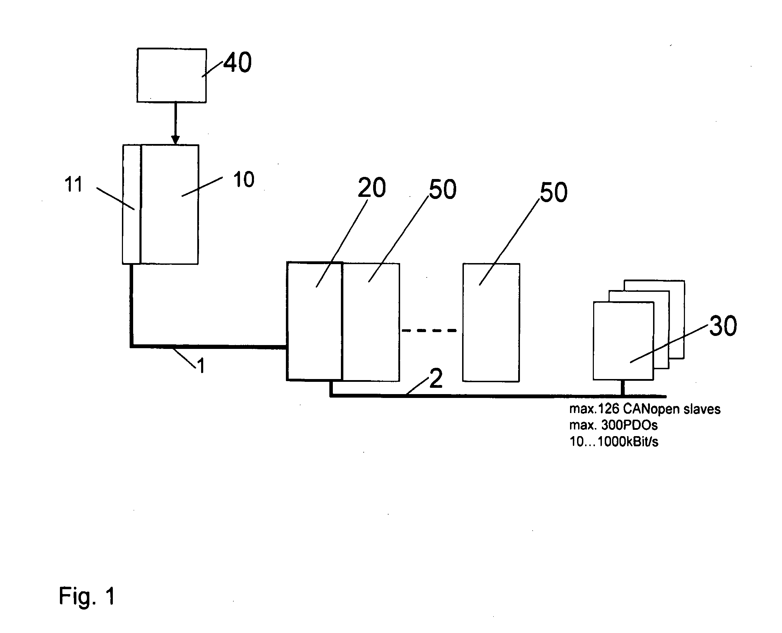

Das in der Fig. 1 dargestellte Steuerungssystem umfasst eine als Master arbeitende übergeordnete Einheit 10, die als speicherprogrammierbare Steuerung (SPS) ausgeführt ist.

Die SPS 10 ist über ihr Kommunikationsmodul 11 und eine erste Kommunikationsverbindung 1 basierend auf einem ersten Feldbusprotokoll mit einem Gateway- Gerät 20 verbunden. Das Gateway- Gerät 20 stellt dabei die Kommunikationsfähigkeit zwischen Feldbussen 1, 2 verschiedener Protokolle, beispielsweise zwischen PROFINET und CAN bzw. CANopen bereit.

Das Gateway- Gerät 20 umfasst eine erste Funktionseinheit, welche die Kommunikation mit der Steuereinheit 10 über das Feldbusprotokoll PROFINET 1 abwickelt und eine zweite Funktionseinheit zur Kommunikation über das Feldbusprotokoll CAN oder CANopen 2 mit daran angeschlossenen CAN- oder CANopen- kompatiblen als Slave arbeitende Feldgeräten 30.

In einer vorteilhaften Ausführungsform des dargestellten Steuerungssystems sind optional an eine dritte im Gateway- Gerät 20 integrierte Funktionseinheit, welche Ein- und/oder Ausgabefunktionalitäten aufweist, weitere Feldgeräte 50 anschließbar. Mittels der dritten Funktionseinheit werden in vorteilhafter Weise die Funktionen der üblicherweise als separate Geräte ausgeführten Ein-/ Ausgabeeinheiten im erfindungsgemäßen Gateway-Gerät 20 integriert.

Erfindungsgemäß ist eine Gerätebeschreibungsdatei 40, welche die für das zweite Feldbusprotokoll vorgesehenen Parameter des Slave- Gerätes enthält in vorzugsweise drei Unterblöcke zerlegt und ist zur Übertragung in das erste Feldbusgerät über das erste Feldbusprotokoll vorgesehen. Der erste Block umfasst Informationen zur die Netzwerkkonfiguration/ Übertragungstechnik des Slave Gerätes für das zweite Feldbusprotokoll, der zweite Block umfasst Informationen über die interne Gerätekonfiguration des Slave Gerätes und der dritte Block umfasst die Konfiguration des Geräteprozessabbildes.

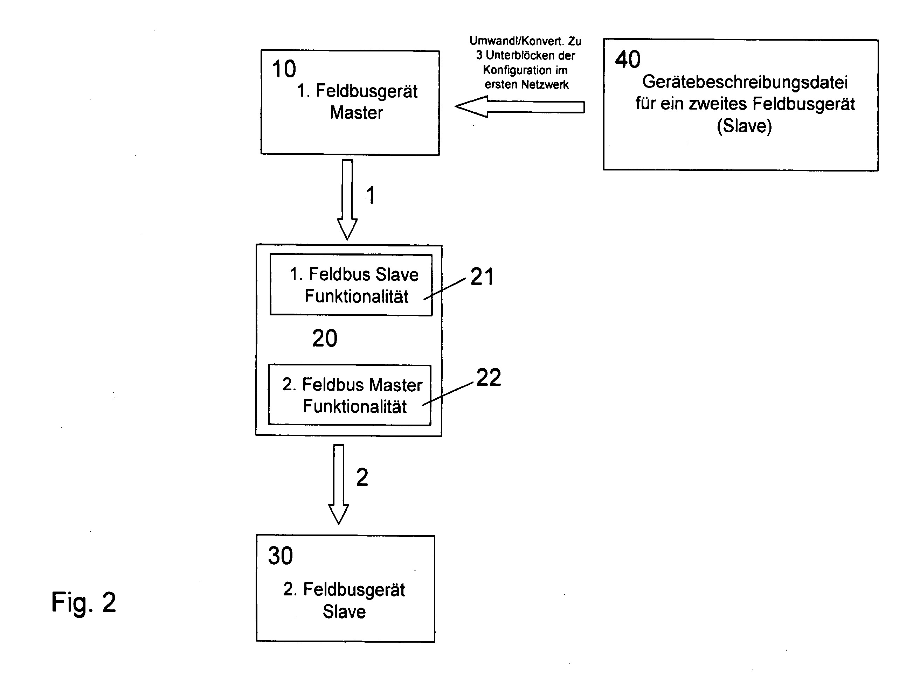

Fig. 2 zeigt Verfahrensablauf zur Parametrierung der als Slave arbeitenden Feldgeräte 30 des Automatisierungs- oder Steuerungssystems. Ein erster Netzwerkdienst überträgt über die erste Kommunikationsverbindung 1 die in den drei Unterblöcken abgelegten Parameter des Feldgerätes 30 von der SPS 10 basierend auf dem Feldbusprotokoll PROFINET 1 in die als Slave- Funktion arbeitende erste Funktionalität 21 des Gateway-Gerätes 20.

Eine im Gateway- Gerät 20 integrierte weitere Funktionalität wertet die in den drei Unterblöcken abgelegten Parameter des Feldgerätes 30 aus und fasst diese zu einem einzigen Konfigurationsblock zusammen.

Der zusammengefasste Konfigurationsblock wird dann in einen Feldbusmaster- Stack des Gateway- Gerätes 20 geladen und über eine als Master- Funktion arbeitende zweite Funktionalität 22 des Gateway- Gerätes 20 mittels eines zweiten Netzwerkdienstes über die zweite Kommunikationsverbindung 2 in das Feldgerät 30 übertragen.

## Patentansprüche

1. System zur Parametrierung von Feldgeräten (30) eines Automatisierungs- oder Steuerungssystems mit
- einer übergeordnete Einheit (10), die über eine erste Kommunikationsverbindung (1) basierend auf einem ersten Feldbusprotokoll mit einem Kommunikationsschnittstellenmodul (20) verbunden ist,
- das Kommunikationsschnittstellenmodul (20) über eine zweite Kommunikationsverbindung (2) basierend auf einem zweiten Feldbusprotokoll (2) mit wenigstens einem Feldgerät (30) verbunden ist, **dadurch gekennzeichnet dass**
- in der übergeordneten Einheit (10) aus den in einer Gerätebeschreibungsdatei (40) für das Feldgerät (30) abgelegten Datenstruktur zur Parametrierung des Feldgerätes (30) Unterblöcke erzeugt und abgelegt sind,
- ein erster Netzwerkdienst die in Unterblöcken abgelegten Parameter des Feldgerätes (30) von der übergeordneten Einheit (10) über die erste Kommunikationsverbindung (1) in eine als Slave- Funktion arbeitende erste Funktionalität des Kommunikationsschnittstellenmoduls (20) überträgt,
- eine im Kommunikationsschnittstellenmodul (20) integrierte weitere Funktionalität die in Unterblöcken abgelegten Parameter des Feldgerätes (30) auswertet und zu einem einzigen Konfigurationsblock zusammenfasst,
- den zusammengefassten Konfigurationsblock in einen Feldbusmaster- Stack des Kommunikationsschnittstellenmoduls (20) lädt, und
- über eine als Master- Funktion arbeitende zweite Funktionalität des Kommunikationsschnittstellenmoduls (20) mittels eines zweiten Netzwerkdienstes über die zweite Kommunikationsverbindung (2) den Konfigurationsblock in das Feldgerät (30) überträgt.

2. System nach Anspruch 1, **dadurch gekennzeichnet, dass** das Kommunikationsschnittstellenmodul (20) mit der übergeordneten Einheit (10) über ein hochleistungsfähige Ethernet-, PROFIBUS- oder PROFINET- Protokoll kommuniziert.

3. System nach einem der vorstehenden Ansprüche, **dadurch gekennzeichnet, dass** das Kommunikationsschnittstellenmodul (20) mit den Feldgeräten (30) über das Feldbusprotokoll CAN oder CANOPEN kommuniziert.

4. System nach einem der vorstehenden Ansprüche, **dadurch gekennzeichnet, dass** ein erster Unterblock Informationen zur die Netzwerkkonfiguration des Slave Gerätes für das zweite Feldbusprotokoll, wie beispielsweise Informationen zu Netzwerkadressen und Übertragungsgeschwindigkeit, umfasst.

5. System nach einem der vorstehenden Ansprüche, **dadurch gekennzeichnet, dass** ein zweiter Unterblock Informationen über die interne Gerätekonfiguration des Slave Gerätes, wie beispielsweise die Konfiguration der zyklischen Echtzeitdaten, die Konfiguration der analogen Kanäle, das Verhalten der sicherheitsgerichteten Ein-/ Ausgänge, umfasst.

6. System nach einem der vorstehenden Ansprüche, **dadurch gekennzeichnet, dass** ein dritter Unterblock eine Konfiguration des Geräteprozessabbildes, wie beispielsweise das Abbild und die Anzahl der Ein-/ Ausgänge, umfasst.

7. System nach einem der vorstehenden Ansprüche, **dadurch gekennzeichnet, dass** die übergeordnete Einheit (10) eine Steuereinheit (10) oder ein Leitsystem ist.

8. System nach einem der vorstehenden Ansprüche, **dadurch gekennzeichnet, dass** das Kommunikationsschnittstellenmodul (20) auf der übergeordneten Ebene zur übergeordneten Einheit (10) die Funktion eines Slaves und auf der Feldebene zu den Feldgeräten (30) die Funktion eines Masters hat.

9. Verfahren zur Parametrierung von Feldgeräten (30) eines Automatisierungs- oder Steuerungssystems mit einer übergeordnete Einheit (10), die über eine erste Kommunikationsverbindung (1) basierend auf einem ersten Feldbusprotokoll mit einem Kommunikationsschnittstellenmodul (20) verbunden wird und mit wenigstens einem Feldgerät (30), dass mit dem Kommunikationsschnittstellenmodul (20) über eine zweite Kommunikationsverbindung (2) basierend auf einem zweiten Feldbusprotokoll (2) verbunden wird, **dadurch gekennzeichnet dass**
- aus der in einer Gerätebeschreibungsdatei (40) für das Feldgerät (30) abgelegten Datenstruktur zur Parametrierung des Feldgerätes (30) Unterblöcke erzeugt werden,
- mittels eines ersten Netzwerkdienstes die Unterblöcken von der übergeordneten Einheit (10) über die erste Kommunikationsverbindung (1) in eine als Slave- Funktion arbeitende erste Funktionalität des Kommunikationsschnittstellenmoduls (20) übertragen werden,
- mittels einer weiteren Funktionalität die in Unterblöcken abgelegten Parameter des Feldgerätes (30) auswertet und zu einem einzigen Konfigurationsblock zusammengefasst werden,
- der zusammengefasste Konfigurationsblock in einen Feldbusmaster- Stack des Kommunikationsschnittstellenmoduls (20) geladen wird, und
- über eine als Master- Funktion arbeitende zweite Funktionalität des Kommunikationsschnittstellenmoduls (20) mittels eines zweiten Netzwerkdienstes über die zweite Kommunikationsverbindung (2) der Konfigurationsblock in das Feldgerät (30) übertragen wird.

10. Verwendung des Kommunikationsschnittstellenmoduls (20) nach einem der vorstehenden Ansprüche in Automatisierungs- oder Steuerungssystemen der Prozessautomation oder Maschinensteuerung.

## Claims

1. System for parameterizing field devices (30) of an automation or control system, having
- a superordinate unit (10) which is connected to a communication interface module (20) via a first communication link (1) based on a first field bus protocol, wherein
- the communication interface module (20) is connected to at least one field device (30) via a second communication link (2) based on a second field bus protocol (2), **characterized in that**
- sub-blocks are generated from the data structure for parameterizing the field device (30), which is stored in a device description file (40) for the field device (30), and are stored in the superordinate unit (10),
- a first network service transmits the parameters of the field device (30), which are stored in sub-blocks, from the superordinate unit (10) to a first functionality of the communication interface module (20), which operates as a slave function, via the first communication link (1),
- a further functionality integrated in the communication interface module (20) evaluates the parameters of the field device (30), which are stored in sub-blocks, and combines said parameters to form a single configuration block,
- loads the combined configuration block into a field bus master stack of the communication interface module (20), and
- transmits the configuration block to the field device (30) via a second functionality of the communication interface module (20), which operates as a master function, using a second network service via the second communication link (2).

2. System according to Claim 1, **characterized in that** the communication interface module (20) communicates with the superordinate unit (10) using a high-performance Ethernet, Profibus or Profinet protocol.

3. System according to one of the preceding claims, **characterized in that** the communication interface module (20) communicates with the field devices (30) using the CAN or CANopen field bus protocol.

4. System according to one of the preceding claims, **characterized in that** a first sub-block comprises information relating to the network configuration of the slave device for the second field bus protocol, for example information relating to network addresses and transmission speed.

5. System according to one of the preceding claims, **characterized in that** a second sub-block comprises information relating to the internal device configuration of the slave device, for example the configuration of the cyclical real-time data, the configuration of the analog channels, the behavior of the safety-oriented inputs/outputs.

6. System according to one of the preceding claims, **characterized in that** a third sub-block comprises a configuration of the device process image, for example the image and number of inputs/outputs.

7. System according to one of the preceding claims, **characterized in that** the superordinate unit (10) is a control unit (10) or a guidance system.

8. System according to one of the preceding claims, **characterized in that** the communication interface module (20) has the function of a slave with respect to the superordinate unit (10) at the superordinate level and has the function of a master with respect to the field devices (30) at the field level.

9. Method for parameterizing field devices (30) of an automation or control system having a superordinate unit (10) which is connected to a communication interface module (20) via a first communication link (1) based on a first field bus protocol and having at least one field device (30) which is connected to the communication interface module (20) via a second communication link (2) based on a second field bus protocol (2), **characterized in that**
- sub-blocks are generated from the data structure for parameterizing the field device (30), which is stored in a device description file (40) for the field device (30),
- a first network service is used to transmit the sub-blocks from the superordinate unit (10) to a first functionality of the communication interface module (20), which operates as a slave function, via the first communication link (1),
- a further functionality is used to evaluate the parameters of the field device (30), which are stored in sub-blocks, and to combine said parameters to form a single configuration block,
- the combined configuration block is loaded into a field bus master stack of the communication interface module (20), and
- the configuration block is transmitted to the field device (30) via a second functionality of the communication interface module (20), which operates as a master function, using a second network service via the second communication link (2).

10. Use of the communication interface module (20) according to one of the preceding claims in automation or control systems of process automation or machine control.

## Revendications

1. Système pour le paramétrage d'appareils de terrain (30) d'un système d'automatisation ou de commande, comportant
- une unité d'ordre supérieur (10) qui est connectée par l'intermédiaire d'une première liaison de communication (1) sur la base d'un premier protocole de bus de terrain à un module d'interface de communication (20),
- le module d'interface de communication (20) étant connecté par l'intermédiaire d'une deuxième liaison de communication (2) sur la base d'un deuxième protocole de bus de terrain (2) à au moins un appareil de terrain (30), **caractérisé en ce que**
- des sous-blocs sont créés et stockés dans l'unité d'ordre supérieur (10) à partir de la structure de données stockées dans un fichier de description d'appareil (40) pour l'appareil de terrain (30) afin de paramétrer l'appareil de terrain (30)
- un premier service de réseau transmet les paramètres de l'appareil de terrain (30) qui sont stockés dans des sous-blocs de l'unité d'ordre supérieur (10) par l'intermédiaire de la première liaison de communication (1) dans une première fonctionnalité jouant le rôle de fonction esclave du module d'interface de communication (20),
- une autre fonctionnalité intégrée au module d'interface de communication (20) évalue les paramètres de l'appareil de terrain (30) qui sont stockés dans des sous-blocs et les combine en un bloc de configuration unique,
- charge le bloc de configuration combiné dans une pile maîtresse de bus de terrain du module d'interface de communication (20), et
- transmet le bloc de configuration dans l'appareil de terrain (30) par l'intermédiaire d'une deuxième fonctionnalité jouant le rôle de fonction maîtresse du module d'interface de communication (20) au moyen d'un deuxième service de réseau par l'intermédiaire de la deuxième liaison de communication (2).

2. Système selon la revendication 1, **caractérisé en ce que** le module d'interface de communication (20) communique avec l'unité d'ordre supérieur (10) par l'intermédiaire d'un protocole à hautes performances de type Ethernet, PROFIBUS ou PROFINET.

3. Système selon l'une quelconque des revendications précédentes, **caractérisé en ce que** le module d'interface de communication (20) communique avec les appareils de terrain (30) par l'intermédiaire du protocole de bus de terrain CAN ou CANOPEN.

4. Système selon l'une quelconque des revendications précédentes, **caractérisé en ce qu'**un premier sous-bloc contient des informations destinées à la configuration du réseau de l'appareil esclave pour le deuxième protocole de bus de terrain, comme par exemple des informations concernant des adresses de réseau et la vitesse de transmission.

5. Système selon l'une quelconque des revendications précédentes, **caractérisé en ce qu'**un deuxième sous-bloc contient des informations concernant la configuration d'appareil interne de l'appareil esclave, comme par exemple la configuration des données temps réel cycliques, la configuration des canaux analogiques, le comportement des les entrées/sorties associées à la sécurité.

6. Système selon l'une quelconque des revendications précédentes, **caractérisé en ce qu'**un troisième sous-bloc contient une configuration de l'image d'un processus d'appareil, comme par exemple l'image et le nombre des entrées/sorties.

7. Système selon l'une quelconque des revendications précédentes, **caractérisé en ce que** l'unité d'ordre supérieur (10) est une unité de commande (10) ou un système de gestion.

8. Système selon l'une quelconque des revendications précédentes, **caractérisé en ce que** le module d'interface de communication (20) possède la fonction d'un esclave sur le plan d'ordre supérieur par rapport à l'unité d'ordre supérieur (10) et la fonction d'un maître sur le plan du terrain par rapport aux appareils de terrain (30).

9. Procédé pour le paramétrage d'appareils de terrain (30) d'un système d'automatisation ou de commande, comportant une unité d'ordre supérieur (10) qui est connectée par l'intermédiaire d'une première liaison de communication (1) sur la base d'un premier protocole de bus de terrain à un module d'interface de communication (20) et comportant au moins un appareil de terrain (30), qui est connecté au module d'interface de communication (20) par l'intermédiaire d'une deuxième liaison de communication (2) sur la base d'un deuxième protocole de bus de terrain (2), **caractérisé en ce que**
- des sous-blocs sont générés à partir de la structure de données stockée dans un fichier de description d'appareil (40) pour l'appareil de terrain (30) afin de paramétrer l'appareil de terrain (30),
- les sous-blocs sont transmis au moyen d'un premier service de réseau par l'unité d'ordre supérieur (10) par l'intermédiaire de la première liaison de communication (1) dans une première fonctionnalité du module d'interface de communication (20) jouant le rôle de fonction esclave,
- les paramètres de l'appareil de terrain (30) qui sont stockés dans des sous-blocs sont évalués et sont combinés en un bloc de configuration unique au moyen d'une autre fonctionnalité,
- le bloc de configuration combiné est chargé dans une pile maîtresse de bus de terrain du module d'interface de communication (20), et
- le bloc de configuration contenu dans l'appareil de terrain (30) est transmis par l'intermédiaire d'une deuxième fonctionnalité jouant le rôle de fonction maîtresse du module d'interface de communication (20) au moyen d'un deuxième service de réseau par l'intermédiaire de la deuxième liaison de communication (2).

10. Utilisation du module d'interface de communication (20) selon l'une quelconque des revendications précédentes dans des systèmes d'automatisation ou de commande pour l'automatisation de processus ou la commande de machines.
